# EUROPÄISCHE PATENTSCHRIFT

(11) **EP 4 559 430 B1**
(45) Veröffentlichungstag und Bekanntmachung des Hinweises auf die Patenterteilung: **11.11.2026**
(21) Anmeldenummer: 23211879.4
(22) Anmeldetag: 24.11.2023
(51) Int. Cl.: A61C 1/14

(54) **HANDSTÜCK MIT DREHKNOPF ZUM BETÄTIGEN DER WERKZEUGHALTERUNG**
HANDPIECE WITH ROTARY KNOB TO OPERATE THE TOOL HOLDER
PIÈCE À MAIN AVEC BOUTON ROTATIF POUR ACTIONNER LE PORTE-OUTIL

(43) Veröffentlichungstag der Anmeldung: 28.05.2025
(73) Patentinhaber: W & H Dentalwerk Bürmoos GmbH, 5111 Bürmoos (AT)
(72) Erfinder: GOLLACKNER, Alois, 5303 Thalgau (AT); LANG, Thomas, 5421 Adnet (AT)
(74) Vertreter: Benda, Ralf

(56) Entgegenhaltungen:
- DE-A1- 3 504 075
- US-A- 3 325 899
- US-A- 4 979 899
- US-A- 5 888 200

## Beschreibung

Die vorliegende Erfindung betrifft ein medizinisches, insbesondere dentales, Handstück mit einem Drehknopf zum Betätigen einer Werkzeughalterung des Handstücks.

Bekannterweise sind medizinische, insbesondere dentale, Handstücke mit einer lösbaren Werkzeughalterung ausgestattet, so dass Behandlungswerkzeuge je nach Behandlungssituation ausgetauscht bzw. nach der Verwendung gereinigt werden können. Zum Lösen eines Behandlungswerkzeugs aus der Werkzeughalterung und vorzugsweise auch zum Einführen eines Behandlungswerkzeugs in die Werkzeughalterung ist eine Stellvorrichtung vorgesehen, die ausgebildet ist, die Werkzeughalterung wahlweise in eine Aufnahme-/Lösestellung, in welcher das Behandlungswerkzeugs in die Werkzeughalterung aufnehmbar oder daraus entfernbar ist, und eine Haltestellung, in welcher das Behandlungswerkzeug in der Werkzeughalterung gehalten ist, zu versetzen.

Zum Betätigen der Stellvorrichtung und/ oder als Teil der Stellvorrichtung sind seit vielen Jahren Druckknöpfe Standard, siehe zum Beispiel das Patent US 6,227,854 B1. Um die Werkzeughalterung in die Aufnahme-/Lösestellung zu versetzen muss der Anwender/ die Anwenderin auf den am Handstückkopf angeordneten Druckknopf drücken, d.h. den Druckknopf in den Handstückkopf und/ oder in Richtung der Werkzeughalterung verschieben. Die Betätigung des Druckknopfs ist mit mehreren Nachteilen verbunden: insbesondere ist für den Anwender/ die Anwenderin beim Drücken des Druckknopfs schwer zu erkennen, ob sich die Werkzeughalterung schon in der Aufnahme-/Lösestellung befindet oder nicht und ob somit das Behandlungswerkzeug schon eingeführt oder entnommen werden kann. Aus der Praxis sind Beispiele bekannt, bei denen insbesondere vorsichtigere Anwender/ Anwenderinnen oder Anwender/ Anwenderinnen mit weniger Kraft den Eindruck haben, sie würden schon ausreichend intensiv auf den Druckknopf drücken, das Werkzeug ließe sich aber trotzdem nicht einführen oder entnehmen. Wird dies trotzdem versucht, so kann es zu Schäden an der Werkzeughalterung kommen oder es besteht die Gefahr, dass das Werkzeug nicht ausreichend in der Werkzeughalterung geklemmt ist. Umgekehrt gibt es auch Fälle, bei denen Anwender/ Anwenderinnen die Stellvorrichtung wiederholt mit zu viel Kraft betätigen, so dass Bauteile der Stellvorrichtung, die zum Teil sehr fein sind, zum Beispiel Federelemente oder Lager, brechen.

Das Patent US 3,325,899 offenbart ein gewinkeltes Handstück mit einer Schraubspannzange und einem am Kopfstück lösbar anbringbaren Schlüssel zum Einspannen und Lösen eines Werkzeugs. Dazu wird der am Kopfstück angeschlossene Schlüssel gedreht, wodurch die Spannzange über ein Gewinde axial im Kopfstück bewegbar ist.

Das Patent US 5,888,200 offenbart ein Handstück mit einem Drehring zum Betätigen der Werkzeughalterung. Über in Schlitzen geführten Kugeln wird die Drehbewegung des Drehrings in eine Längsbewegung eines Spannzangen-Stellglieds und eines Spannzangen-Rings gegen die Federkraft von zwei Federn gewandelt, um die Spannzange in die Aufnahme-/Lösestellung für das Werkzeug zu bewegen.

Das Dokument DE3504075A1 offenbart ein medizinisches gewinkeltes Handstück mit einem Knopf zur Betätigung einer Werkzeughalterung durch Drücken auf den Knopf oder durch eine modulierte oder gedämpfte Drehung und Axialbewegung des Knopfs.

Nachteilig ist auch der vergleichsweise hohe Kraftaufwand, der zum Betätigen des Druckknopfs notwendig ist, bei gleichzeitig geringer Größe des Druckknopfs. Zusammenfassend lässt sich somit feststellen, dass das Betätigen einer Werkzeughalterung mittels Druckknopfs für einen Anwender/ eine Anwenderin mühsam und unpraktisch ist. Trotzdem sind Handstücke mit Druckknopf zum Betätigen der Werkzeughalterung im dentalmedizinischen Bereich seit vielen Jahrzehnten gängige Praxis und weltweit vorherrschend.

Der vorliegenden Erfindung liegt daher die Aufgabe zugrunde hierfür Abhilfe zu schaffen und ein medizinisches, insbesondere dentales, gewinkeltes Handstück zu gestalten, bei dem das Behandlungswerkzeug für den Anwender einfacher und komfortabler in die Werkzeughalterung einführbar und/ oder daraus lösbar ist. Insbesondere soll der Anwender/ die Anwenderin eindeutiger erkennen können, ob die Werkzeughalterung die Aufnahme-/Lösestellung oder die Haltestellung erreicht hat. Auch soll der Kraftaufwand zum Betätigen der Stellvorrichtung verringert werden oder zumindest der Anwender/ die Anwenderin den Eindruck haben, dass die Stellvorrichtung mit weniger Kraftaufwand und flüssiger zu bedienen sei.

Diese Aufgabe wird gemäß der vorliegenden Erfindung durch ein medizinisches, insbesondere dentales, gewinkeltes Handstück mit den Merkmalen des Anspruchs 1 gelöst. Besonders vorteilhafte Ausführungsformen sind in den Unteransprüchen angeführt.

Das medizinische, insbesondere dentale, gewinkelte Handstück, umfasst: ein sich entlang einer Längsachse erstreckendes Griffstück, ein an einem Ende des Griffstücks angeordnetes Kopfstück, eine in dem Kopfstück drehbar um eine Drehachse angeordnete Werkzeughalterung zur lösbaren Aufnahme eines Behandlungswerkzeugs und eine an dem Kopfstück vorgesehene und auf die Werkzeughalterung wirkende Stellvorrichtung. Die Stellvorrichtung ist ausgebildet, die Werkzeughalterung wahlweise in eine Aufnahme-/Lösestellung, in welcher das Behandlungswerkzeug in die Werkzeughalterung aufnehmbar oder daraus entfernbar ist, und eine Haltestellung, in welcher das Behandlungswerkzeug in der Werkzeughalterung gehalten ist, zu versetzen. Die Stellvorrichtung weist eine Kulissenführung auf, durch welche ein am Kopfstück angeordneter Drehknopf entlang der Drehachse relativ zur Werkzeughalterung derart bewegbar ist, dass, wenn der Drehknopf der Werkzeughalterung angenähert ist, die Werkzeughalterung in die Aufnahme-/Lösestellung versetzt ist, und wenn der Drehknopf von der Werkzeughalterung entfernt ist, die Werkzeughalterung in die Haltestellung versetzt ist.

Das Vorsehen einer Stellvorrichtung mit Kulissenführung macht die Bedienbarkeit der Stellvorrichtung des Handstücks für den Anwender/ der Anwenderin merklich komfortabler: Die Kulissenführung ermöglicht es in vorteilhafter Weise definierte Endpunkte für die Bewegung der Stellvorrichtung und/ oder des Drehknopfes festzulegen. Damit kann der Anwender/ die Anwenderin in vorteilhafter Weise anhand der Drehbarkeit der Stellvorrichtung und/ oder des Drehknopfs erkennen, ob die Werkzeughalterung die Aufnahme-/Lösestellung oder die Haltestellung einnimmt oder nicht. Sobald die Drehbarkeit der Stellvorrichtung und/ oder des Drehknopfes endet weiß der Anwender/ die Anwenderin, dass das Behandlungswerkzeug in die Werkzeughalterung einführbar, daraus lösbar oder zuverlässig darin gehalten ist. Die Kulissenführung ermöglicht auch eine komfortable, gleichmäßige Drehbewegung des Drehknopfs mit gleichbleibendem, geringem Kraftaufwand zum Betätigen der Werkzeughalterung.

Ein weiteres medizinisches, insbesondere dentales, gewinkeltes Handstück, umfasst: ein sich entlang einer Längsachse erstreckendes Griffstück, ein an einem Ende des Griffstücks angeordnetes Kopfstück, eine in dem Kopfstück drehbar um eine Drehachse angeordnete Werkzeughalterung zur lösbaren Aufnahme eines Behandlungswerkzeugs und eine an dem Kopfstück vorgesehene und auf die Werkzeughalterung wirkende Stellvorrichtung. Die Stellvorrichtung ist ausgebildet, die Werkzeughalterung wahlweise in eine Aufnahme-/Lösestellung, in welcher das Behandlungswerkzeug in die Werkzeughalterung aufnehmbar oder daraus entfernbar ist, und eine Haltestellung, in welcher das Behandlungswerkzeug in der Werkzeughalterung gehalten ist, zu versetzen. Am Kopfstück ist des Weiteren ein Drehknopf angeordnet, der um maximal 90° um die Drehachse der Werkzeughalterung bewegbar ist, um die Werkzeughalterung zwischen der Aufnahme-/Lösestellung und der Haltestellung zu bewegen.

Das Vorsehen eines Drehknopfes mit begrenzter Drehbarkeit oder begrenztem Drehwinkel erleichtert dem Anwender/ der Anwenderin in großem Maß die Bedienbarkeit der Stellvorrichtung: an der für den Anwender/ die Anwenderin wahrnehmbaren, wie zum Beispiel im Folgenden noch im Detail beschrieben haptisch, visuell und/ oder akustisch wahrnehmbaren, Begrenzung der Drehbarkeit des Drehknopfes kann sich der Anwender/ die Anwenderin in vorteilhafter Weise orientieren, ob die Werkzeughalterung (bereits) die Aufnahme-/Lösestellung oder die Haltestellung einnimmt. Sobald die Drehbarkeit des Drehknopfes endet weiß der Anwender/ die Anwenderin, dass das Behandlungswerkzeug in die Werkzeughalterung einführbar, daraus lösbar oder zuverlässig darin gehalten ist.

Die Kulissenführung ist derart ausgebildet, dass durch Betätigen, d.h. Drehen, des Drehknopfes um die Drehachse der Werkzeughalterung und/ oder relativ zu einer Außenhülse des Kopfstücks der Drehknopf entlang oder längs der Drehachse relativ zur Werkzeughalterung bewegbar ist. Die Kulissenführung ist derart ausgebildet, dass durch Drehen des Drehknopfs dieser gleichzeitig eine Drehbewegung um die Drehachse und eine Längsbewegung entlang der Drehachse der Werkzeughalterung ausführt. Die Kulissenführung ist vorzugsweise derart ausgebildet, dass durch Drehen des Drehknopfs in eine erste Drehrichtung der Drehknopf sich der Werkzeughalterung annähert und/ oder die Werkzeughalterung in die Aufnahme-/Lösestellung versetzt. Die Kulissenführung ist vorzugsweise derart ausgebildet, dass durch Drehen des Drehknopfs in eine zweite Drehrichtung, die insbesondere von der ersten Drehrichtung unterschiedlich und/ oder dieser entgegengesetzt ist, der Drehknopf sich von der Werkzeughalterung entfernt und/ oder die Werkzeughalterung in die Haltestellung versetzt. Diese Merkmale vereinfachen die Bedienbarkeit der Stellvorrichtung weiter und garantieren eine zuverlässige und dauerhafte Verwendbarkeit der Stellvorrichtung und des Handstücks.

Das medizinische, insbesondere dentale, Handstück ist als gewinkeltes Handstück oder Winkelstück ausgebildet, bei dem die Drehachse der Werkzeughalterung und die Längsachse des Griffstücks gewinkelt zueinander, in einem Winkel ungleich 0°, angeordnet sind. Der Drehknopf kann somit platzsparend und ergonomisch vorteilhaft an einem Ende des Kopfstücks des Handstücks, gegenüber der Einstecköffnung für das Behandlungswerkzeug angeordnet sein.

Das medizinische, insbesondere dentale, Handstück umfasst eine Antriebsvorrichtung, die ausgebildet ist, ein am Handstück befestigtes Behandlungswerkzeug in eine Rotationsbewegung zu versetzen. Die Antriebsvorrichtung ist vorzugsweise als pneumatische Antriebsvorrichtung ausgebildet. Die pneumatische Antriebsvorrichtung umfasst zum Beispiel ein pneumatisch antreibbares Laufrad, das drehfest mit der Werkzeughalterung verbunden ist, und eine oder mehrere Leitungen für ein Treibgas, insbesondere Druckluft, die das Treibgas auf das Laufrad abgeben, um das Laufrad und die Werkzeughalterung in Bewegung zu versetzen. Alternativ ist die Antriebsvorrichtung als mechanische Antriebsvorrichtung ausgebildet. Die mechanische Antriebsvorrichtung umfasst mechanische Antriebselemente wie zum Beispiel eine Welle, ein Getriebe, ein Zahnrad und/ oder einen elektrischen oder pneumatischen Motor. Diese mechanischen Antriebselemente stehen mit der Werkzeughalterung in operativer Verbindung, um die Werkzeughalterung in Rotation zu versetzen. Die Stellvorrichtung mit dem Drehknopf ist somit an pneumatisch und mechanisch angetriebenen Handstücken einsetzbar, wodurch in vorteilhafter Weise Herstellungskosten für das Handstück verringert werden.

Das Griffstück und das Kopfstück bzw. das Handstück sind durch eine ein- oder mehrteilige Außenhülse zur Umgebung abgegrenzt. Das Kopfstück weist vorzugsweise eine Kopfhülse auf. Das Griffstück weist vorzugsweise eine gerade oder gebogene Griffhülse aus. Die Außenhülse, Kopfhülse und Griffhülse sind hohl, so dass darin Komponenten des Handstücks aufnehmbar und/ oder lagerbar sind.

Die Stellvorrichtung und insbesondere der Drehknopf sind vorzugsweise an der Außenhülse oder Kopfhülse des Kopfstücks befestigt. Zumindest Teile der Stellvorrichtung können insbesondere auch im Inneren der hohlen Außenhülse oder Kopfhülse aufgenommen sein.

Die um die Drehachse drehbare Werkzeughalterung ist zum Beispiel als kraftschlüssige Werkzeughalterung, zum Beispiel mit federnden Halteelementen, Federarmen, Haltelaschen oder ähnlichen Komponenten ausgebildet. Die um die Drehachse drehbare Werkzeughalterung ist zum Beispiel als formschlüssige Werkzeughalterung ausgebildet. Die Werkzeughalterung umfasst vorzugsweise eine Spannzange. Die Werkzeughalterung ist vorzugsweise mit einer Werkzeugaufnahmeöffnung in der Außenhülse oder Kopfhülse verbunden, durch welche das Behandlungswerkzeug in die Werkzeughalterung, insbesondere in die Spannzange, einführbar oder daraus lösbar ist. Die Stellvorrichtung mit dem Drehknopf ist somit an unterschiedlichen Arten von Werkzeughalterungen einsetzbar, wodurch in vorteilhafter Weise Herstellungskosten für das Handstück verringert werden.

Vorzugsweise weist die Kulissenführung eine Kulissennut und einen in der Kulissennut geführten Kulissenstein auf, wobei die Kulissennut und der Kulissenstein insbesondere relativ zueinander beweglich, insbesondere drehbar, sind. Vorzugsweise sind die Kulissennut und der Kulissenstein an unterschiedlichen Bauteilen des Handstücks und/ oder der Stellvorrichtung vorgesehen. Zum Beispiel ist entweder die Kulissennut oder der Kulissenstein an dem Drehknopf vorgesehen. Zum Beispiel ist entweder die Kulissennut oder der Kulissenstein an einer Kulissenhülse des Handstücks vorgesehen. Besonders bevorzugt ist der Kulissenstein an dem Drehknopf und die Kulissennut an der Kulissenhülse vorgesehen. Alternativ ist der Kulissenstein an der Kulissenhülse und die Kulissennut an dem Drehknopf vorgesehen. Alternativ ist ein Kulissenstein und eine Kulissennut an dem Drehknopf und ein Kulissenstein und eine Kulissennut an der Kulissenhülse vorgesehen. Das Vorsehen der Kulissennut und des Kulissensteins an dem Drehknopf und der Kulissenhülse, somit an Bauteilen des Handstücks, die an seinem Außenumfang angeordnet sind, ermöglicht dem Anwender/ der Anwenderin in vorteilhafter Weise die Endpunkte der Bewegung der Stellvorrichtung und/ oder des Drehknopfes besonders eindeutig und unverfälscht wahrzunehmen.

Vorzugsweise ist der an dem Drehknopf vorgesehene Kulissenstein und/ oder die an dem Drehknopf vorgesehene Kulissennut drehfest mit dem Drehknopf verbunden und/ oder gemeinsam mit dem Drehknopf drehbar. Vorzugsweise ist der an dem Drehknopf vorgesehene Kulissenstein und/ oder die an dem Drehknopf vorgesehene Kulissennut einteilig mit dem Drehknopf ausgebildet. Vorzugsweise ist der an dem Drehknopf vorgesehene Kulissenstein als separates Element ausgebildet, das, insbesondere drehfest, an dem Drehknopf befestigt ist. Vorzugsweise ist/ sind der an dem Drehknopf vorgesehene Kulissenstein und/ oder die an dem Drehknopf vorgesehene Kulissennut an einer Umfangswand oder Ringwand des Drehknopfs angeordnet, wobei die Umfangswand oder Ringwand des Drehknopfs insbesondere an einem äußeren Umfang einer Kappe des Drehknopfes angeordnet ist. Vorzugsweise ragt der an dem Drehknopf vorgesehene Kulissenstein, insbesondere von der äußeren Umfangs- oder Ringwand, in einen durch den Drehknopf gebildeten Innenraum des Drehknopfs, wobei der Innenraum insbesondere durch die Kappe und die gewinkelt zur Kappe angeordnete äußere Umfangswand oder Ringwand des Drehknopfs gebildet ist. Diese Merkmale ermöglichen es dem Anwender/ der Anwenderin in vorteilhafter Weise die Endpunkte der Bewegung der Stellvorrichtung und/ oder des Drehknopfes besonders unmittelbar wahrzunehmen.

Vorzugsweise ist der an dem Drehknopf vorgesehene Kulissenstein an einem federnden Abschnitt der äußeren Umfangswand oder Ringwand vorgesehen. Damit wird in vorteilhafter Weise die Montage des Drehknopfs an dem Handstück, insbesondere das Einfügen des Kulissensteins in die Kulissennut erleichtert. Vorzugsweise ist der federnde Abschnitt der äußeren Umfangswand oder Ringwand durch eine Federlasche gebildet, auf welcher der Kulissenstein angeordnet ist. Vorzugsweise ist die Federlasche durch Einschnitte in die Umfangswand oder Ringwand, insbesondere durch quer zum Umfang der Ringwand angeordnete Einschnitte, gebildet.

Vorzugsweise ist die Kulissenhülse drehfest in dem Handstück, insbesondere dem Kopfstück angeordnet. Vorzugsweise ist die Kulissenhülse drehfest an der Kopfhülse, insbesondere an der Innenwand der Kopfhülse, angeordnet. Vorzugsweise sind an der Außenseite oder am Außenumfang der Kulissenhülse und an der Innenseite der Kopfhülse ineinandergreifende Sperrelemente vorgesehen, wodurch ein Verdrehen der Kulissenhülse relativ zum Handstück verhindert wird. Die Sperrelemente umfassen zum Beispiel Fortsätze, insbesondere Laschen, und Aufnahmen für die Fortsätze, zum Beispiel Einstiche oder Rücksprünge. Das drehfeste Anordnen der Kulissenhülse in dem Handstück garantiert eine zuverlässige Bedienbarkeit der Stellvorrichtung und Kulissenführung.

Vorzugsweise ist die Kulissenhülse als hohle, zylindrische Hülse ausgebildet. Damit kann sie andere Bauteile des Kopfstücks aufnehmen und/ oder lagern, womit in vorteilhafter Weise die Abmessung, insbesondere die Höhe, des Kopfstücks geringgehalten werden kann. An der Innenseite der Kulissenhülse können vorzugsweise Schultern, Stufen oder ähnliche Elemente vorhanden sein, die als Lagerstellen für Bauteile dienen. Vorzugsweise umfasst die Kulissenhülse auch an ihrer Außenseite Aufnahmen oder Lagerstellen für Bauteile des Kopfstücks. In oder an der Kulissenhülse aufgenommene oder gelagerte Bauteil umfassen zum Beispiel ein Lager, insbesondere ein Wälzlager zur drehbaren Lagerung der Werkzeughalterung, zumindest Teile der Werkzeughalterung, zumindest Teile der auf die Werkzeughalterung wirkende Stellvorrichtung, ein Dichtelement, ein Federelement und/ oder weitere Bauteile.

Vorzugsweise ist der an der Kulissenhülse vorgesehene Kulissenstein und/ oder die an der Kulissenhülse vorgesehene Kulissennut drehfest mit der Kulissenhülse verbunden. Vorzugsweise ist der an der Kulissenhülse vorgesehene Kulissenstein und/ oder die an der Kulissenhülse vorgesehene Kulissennut einteilig mit der Kulissenhülse ausgebildet. Vorzugsweise ist der an der Kulissenhülse vorgesehene Kulissenstein als separates Element ausgebildet, das, insbesondere drehfest, an der Kulissenhülse befestigt ist. Vorzugsweise ist/ sind der an der Kulissenhülse vorgesehene Kulissenstein und/ oder die an der Kulissenhülse vorgesehene Kulissennut an einer Außenseite einer zylindrischen Hülsenwand der Kulissenhülse angeordnet. Diese Merkmale ermöglichen es dem Anwender/ der Anwenderin in vorteilhafter Weise die Endpunkte der Bewegung der Stellvorrichtung und/ oder des Drehknopfes besonders unmittelbar wahrzunehmen.

Vorzugsweise weist die Kulissennut eine längliche und/ oder schlitzförmige Gestalt auf. Vorzugsweise erstreckt sich die Kulissennut kreisbogenförmig um die Drehachse der Werkzeughalterung und/ oder um die Kulissenhülse und/ oder innerhalb des Kopfstücks. Vorzugsweise weist der Kreisbogen, den die Kulissennut beschreibt, einen Winkel von maximal 135° auf, bevorzugt von maximal 100°, besonders bevorzugt von etwa 45° - 90°. Vorzugsweise erstreckt sich die Kulissennut ansteigend um die Drehachse der Werkzeughalterung und/ oder um die Kulissenhülse und/ oder innerhalb des Kopfstücks. Vorzugsweise sind die voneinander beabstandeten Enden der Kulissennut in unterschiedlichen Ebenen angeordnet, insbesondere in unterschiedlichen Ebenen, die jeweils orthogonal zur Drehachse angeordnet sind. Vorzugsweise beträgt der Steigungswinkel der Kulissennut weniger als 15°, vorzugsweise etwa 8° - 12°, besonders bevorzugt etwa 10°. Diese Merkmale ermöglichen in vorteilhafter Weise ein besonders leichtgängiges Bedienen der Stellvorrichtung und/ oder Kulissenführung.

Vorzugsweise ist die Kulissennut, insbesondere an ihren Enden, geschlossen. Vorzugsweise weist die Kulissennut an den, insbesondere geschlossenen, Enden ihrer Längsausdehnung eine Wandung auf, an welcher die Längsausdehnung endet und/ oder welche die Kulissennut mit der zylindrischen Hülsenwand der Kulissenhülse oder der Umfangswand oder Ringwand des Drehknopfes, in welcher die Kulissennut gebildet ist, verbindet. Vorzugsweise umfasst die Kulissennut oder die Kulissenführung Anschläge an den Enden ihrer Längsausdehnung, welche die Bewegung des in der Kulissennut geführten Kulissensteins begrenzen. Vorzugsweise sind die Anschläge durch die geschlossenen Enden und/ oder Wandungen der Kulissennut gebildet. Die geschlossenen Enden oder die Anschläge begrenzen die Bewegung des Kulissensteins und somit die Drehung und die Bewegung des Drehknopfs entlang der Drehachse bzw. relativ zur Werkzeughalterung. Damit erhält der Anwender/ die Anwenderin in vorteilhafter Weise eine eindeutige Rückmeldung, ob die Werkzeughalterung die Aufnahme-/Lösestellung oder die Haltestellung einnimmt oder nicht. Sobald die Drehbarkeit des Drehknopfes endet erkennt der Anwender/ die Anwenderin unzweifelhaft, dass das Behandlungswerkzeug in die Werkzeughalterung einführbar, daraus lösbar oder zuverlässig darin gehalten ist.

Vorzugsweise weist die Kulissennut an zumindest einem Ende oder Endabschnitt eine Schulter oder Stufe auf, über welche der in der Kulissennut geführte Kulissenstein bewegbar ist. Vorzugsweise ist die Schulter oder Stufe an jenem Ende der länglichen Kulissennut vorgesehen, das dem Drehknopf, insbesondere dessen Kappe, näher ist. Vorzugsweise ist die Stufe von dem geschlossenen Ende, der Wandung oder dem Anschlag beabstandet, so dass der Kulissenstein nach dem Überwinden der Stufe zwischen der Stufe und dem geschlossenen Ende, der Wandung oder dem Anschlag Platz findet. Vorzugsweise ist jener Abschnitt der Kulissennut zwischen der Stufe und dem geschlossenen Ende, der Wandung oder dem Anschlag als Rücksprung ausgebildet, so dass der Kulissenstein nach dem Überwinden der Stufe in diesen Rücksprung mit einem, zum Beispiel klickenden, Geräusch einrastet und dabei ein akustisch wahrnehmbares Geräusch und/ oder eine haptisch wahrnehmbare Vibration erzeugt. Vorzugsweise wird dieses Einrasten durch ein Federelement, das zwischen der Kulissenhülse und dem Drehknopf angeordnet ist und diese beiden Elemente gegeneinander vorspannt, unterstützt. Insbesondere bewirkt das Federelement durch die Vorspannung ein ruckartiges Entfernen des Drehknopfes von der Kulissenhülse, sobald der Kulissenstein die Stufe überwunden hat, wodurch der Kulissenstein in den Rücksprung mit einem Geräusch und/ oder eine spürbare Vibration erzeugend einrastet. Damit erhält der Anwender/ die Anwenderin in vorteilhafter Weise eine eindeutige oder zusätzlich Rückmeldung über den Zustand der Werkzeughalterung, insbesondere die Einnahme der Haltestellung.

Vorzugsweise umfasst die Kulissenführung mehrere Kulissennuten und Kulissensteine, zum Beispiel jeweils zwei, drei oder vier Kulissennuten und Kulissensteine, wobei jeweils ein Kulissenstein in einer Kulissennut aufgenommen und geführt ist. Vorzugsweise sind die mehreren Kulissennuten regelmäßig beabstandet voneinander angeordnet. Vorzugsweise sind die mehreren Kulissensteine regelmäßig beabstandet voneinander angeordnet. Das Vorsehen mehrere Kulissennuten und Kulissensteine erhöht in vorteilhafter Weise die Qualität der Bedienbarkeit der Kulissenführung.

Vorzugsweise ist der Kulissenstein des Weiteren derart angeordnet oder ausgebildet, dass er den Drehknopf an dem Kopfstück drehbar hält oder fixiert. Insbesondere bewirkt die Aufnahme oder das Einrasten des Kulissensteins in der Kulissennut eine drehbare Fixierung des Drehknopfs an dem Kopfstück oder an dem Handstück. Vorzugsweise wird der Kulissenstein durch einen Schraubring, der mit dem Kopfstück verschraubbar ist, in der Kulissennut drehbar gehalten. Durch die Verwendung des Kulissensteins zum Fixieren des Drehknopfs an dem Kopfstück sind dafür in vorteilhafter Weise keine weiteren Bauteile notwendig, wodurch die Herstellung des Handstücks in vorteilhafter Weise einfacher und kostengünstiger wird.

Vorzugsweise lagert die Kulissenhülse ein Federelement, welches die Kulissenhülse und den Drehknopf gegeneinander vorspannt. Zusätzlich oder alternativ hält das Federelement den Drehknopf in einer von der Werkzeughalterung entfernten Position. Damit ist die Werkzeughalterung insbesondere auch in die Haltestellung, in der ein Behandlungswerkzeug in der Werkzeughalterung fixiert ist, versetzt. Vorzugsweise ist das Federelement als Tellerfeder oder Spiralfeder ausgebildet. Vorzugsweise umfasst die Kulissenhülse, insbesondere an ihrer Außenseite, eine Schulter, an der das Federelement lagert. Vorzugsweise lagert das Federelement an einer Innenseite des Drehknopfes, insbesondere der Kappe des Drehknopfs. Diese Merkmale stellen in vorteilhafter Weise zusätzlich sicher, dass ein in der Werkzeughalterung aufgenommenes Behandlungswerkzeug zuverlässig in der Werkzeughalterung fixiert ist.

Vorzugsweise umfasst das Handstück, insbesondere das Kopfstück oder die Stellvorrichtung, ein relativ zur Werkzeughalterung bewegliches Eingriffselement, welches bei Bewegung/ Drehung des Drehknopfes durch die Annäherung des Drehknopfes (entlang der Drehachse) in Richtung der Werkzeughalterung ebenfalls in Richtung der Werkzeughalterung bewegbar ist, um die Werkzeughalterung in die Aufnahme-/Lösestellung zu versetzen. Bei Drehung des Drehknopfes in die Gegenrichtung, i.e. wenn der Drehknopf sich von der Werkzeughalterung entfernt, so ist das Eingriffselement ebenfalls von der Werkzeughalterung wegbewegbar, wodurch die Werkzeughalterung die Haltestellung einnimmt. Das Eingriffselement überträgt somit in vorteilhafter Weise die Bewegung des Drehknopfs entlang oder längs der Drehachse auf die Werkzeughalterung und versetzt diese damit in die Aufnahme-/Lösestellung oder in die Haltestellung.

Das Eingriffselement umfasst vorzugsweise einen Keil oder ist als Keilhülse ausgebildet, wobei der Keil dazu vorgesehen in die Werkzeughalterung oder Spannzange einzugreifen, um damit die Werkzeughalterung in die Aufnahme-/Lösestellung oder in die Haltestellung zu versetzen. Der Keil greift zum Beispiel in federnde Elemente der Werkzeughalterung ein und bewegt diese, zum Beispiel in Federlaschen einer kraftschlüssigen Spannzange. Vorzugsweise ist das Eingriffselement zumindest teilweise in der Kulissenhülse aufgenommen und/ oder durchsetzt diese. Das Vorsehen eines Keils ermöglicht in vorteilhafter Weise eine gleichmäßige Betätigung der Werkzeughalterung.

Vorzugsweise ist das Eingriffselement oder zumindest ein Abschnitt davon als Teil des Drehknopfs ausgebildet. Vorzugsweise ist das Eingriffselement oder zumindest ein Abschnitt davon einteilig mit dem Drehknopf ausgebildet. Vorzugsweise ist das Eingriffselement oder zumindest ein Abschnitt davon an dessen Kappe, insbesondere an der Innenseite der Kappe, vorgesehen. Vorzugsweise ragt das Eingriffselement oder zumindest ein Abschnitt davon in den durch den Drehknopf gebildeten Innenraum des Drehknopfs, wobei der Innenraum insbesondere durch die Kappe und die gewinkelt zur Kappe angeordnete äußere Umfangswand oder Ringwand des Drehknopfs gebildet ist. Vorzugsweise erstreckt sich das Eingriffselement oder zumindest ein Abschnitt davon von dem Drehknopf in die oder in Richtung der Kulissenhülse. Vorzugsweise ist das Eingriffselement oder zumindest ein Abschnitt davon gemeinsam mit dem Drehknopf in die im Vorstehenden beschriebene Drehbewegung um und Längsbewegung entlang der Drehachse versetzbar. Das Vorsehen des Eingriffselements als Teil des Drehknopfs erleichtert in vorteilhafter Weise die Herstellung und Montage des Handstücks.

Vorzugsweise ist das Eingriffselement oder zumindest ein Abschnitt davon als vom Drehknopf beabstandetes und/ oder separates Teil ausgebildet, das durch die Annäherung des Drehknopfs in Richtung der Werkzeughalterung von dem Drehknopf kontaktierbar und mit dem Drehknopf in Richtung der Werkzeughalterung bewegbar ist. Vorzugsweise ist das Eingriffselement oder zumindest ein Abschnitt davon durch einen Luftspalt vom Drehknopf beabstandet, insbesondere wenn die Werkzeughalterung die Haltestellung einnimmt. Vorzugsweise ist das Eingriffselement oder zumindest ein Abschnitt davon an der Werkzeughalterung gelagert und/ oder darin aufgenommen. Vorzugsweise ist das Eingriffselement oder zumindest ein Abschnitt davon mit der Werkzeughalterung in Drehung versetzbar. Ein von dem Drehknopf beabstandetes Eingriffselement verringert in vorteilhafter Weise die Gefahr, dass sich während des Betriebs des Handstücks der Drehknopf stark erhitzt.

Vorzugsweise ist es auch denkbar, dass ein erster Abschnitt des Eingriffselements als Teil des Drehknopfs ausgebildet ist, so wie dies im Vorstehenden beschrieben ist, und ein zweiter Abschnitt des Eingriffselements beabstandet und/ oder separat vom Drehknopf ausgebildet ist, so wie dies im Vorstehenden beschrieben ist. Beim Betätigen des Drehknopfs kontaktieren die beiden Abschnitte des Eingriffselements einander und übertragen gemeinsam die Bewegung des Drehknopfs, insbesondere die Bewegung entlang der Drehachse, auf die Werkzeughalterung.

Vorzugsweise ist am Drehknopf ein Dreharm zum Drehen des Drehknopfs vorgesehen, wobei der Dreharm sich entlang der Außenseite des Griffstücks erstreckt. Vorzugsweise ist er Dreharm einteilig mit dem Drehknopf ausgebildet. Vorzugsweise ist der Dreharm bewegbar, insbesondere gemeinsam mit dem Drehknopf, und besonders bevorzugt um die Drehachse drehbar und entlang der Drehachse verschiebbar. Vorzugsweise ist der Dreharm auch relativ zur Längsachse des Griffstücks bewegbar, insbesondere wenn er entlang der Drehachse bewegt wird. Vorzugsweise ist der Dreharm derart angeordnet, dass er sich der Längsachse des Griffstücks annähert und sich von dieser entfernt, wenn er entlang der Drehachse bewegt wird. Der Dreharm ist somit mit dem Drehknopf um die Drehachse der Werkzeughalterung drehbar und gleichzeitig so angeordnet, dass er sich mit der Drehung um die Drehachse der Längsachse des Griffstücks annähert oder sich von dieser entfernt. Vorzugsweise ist der Dreharm zur Längsachse des Griffstücks hin und weg bewegbar. Das Vorsehen des Dreharms erleichtert in vorteilhafterweise die Betätigung des Drehknopfes und damit der Werkzeughalterung.

Vorzugsweise erstreckt sich zumindest ein Teil des Dreharms bis zum Griffteil und/ oder über den Griffteil. Vorzugsweise ist der Dreharm von dem Griffteil oder der Griffhülse beabstandet, insbesondere durch einen Luftspalt. Vorzugsweise umfasst der Dreharm eine Bedien- oder Grifffläche, die insbesondere anschließend an den Kopfteil und/ oder über der Griffhülse angeordnet ist. Vorzugsweise ist die Grifffläche in etwa orthogonal zur Ebene, in der sich die Kappe des Drehknopfs erstreckt, angeordnet. Diese Merkmale erleichtern dem Anwender/ der Anwenderin die Betätigung des Drehknopfes und der Werkzeughalterung zusätzlich.

Im Vorstehenden ist beschrieben, dass der Kreisbogen, den die Kulissennut beschreibt, vorzugsweise einen Winkel von maximal 135° aufweist, siehe oben. Da die Form und Abmessung der Kulissennut die Bewegung und insbesondere die Drehung des Drehknopfs bestimmt, entspricht der Drehwinkel des Drehknopfs im Wesentlichen dem Winkel des Kreisbogens der Kulissennut: der Kreisbogen oder Drehwinkel, den der Drehknopf beschreibt, um die Werkzeughalterung zwischen der Aufnahme-/Lösestellung und der Haltestellung zu bewegen, weist somit vorzugsweise einen Winkel von maximal 135° auf, bevorzugt von maximal 100°, besonders bevorzugt von etwa 45° - 90°. Diese Winkel, insbesondere von maximal etwa 90°, erleichtern die Bedienbarkeit der Stellvorrichtung zusätzlich, da hierzu nur eine geringe Bewegung eines Fingers oder einer Hand notwendig ist.

Wie aus dem Vorstehenden ebenfalls zu erkennen ist, ist der Drehknopf aufgrund der Form und Abmessung der Kulissennut, insbesondere deren Steigung, durch die Drehung um die Drehachse gleichzeitig entlang oder längs der Drehachse bewegbar. Aus dem Vorstehenden ist auch erkennbar, dass die Drehbarkeit des Drehknopfs um die Drehachse durch den zumindest einen Anschlag der Stellvorrichtung, insbesondere der Kulissennut, begrenzt ist. Die Kulissennut, insbesondere ihre Form und Abmessung, bestimmt somit in vorteilhafter Weise den Drehwinkel den der Drehknopf maximal durchschreiten kann, den Weg, den der Drehknopf entlang der Drehachse verschiebbar ist, und mittels des zumindest einen Anschlags die Endposition des Drehknopfs.

Die Erfindung wird nachfolgend anhand bevorzugter Ausführungsbeispiele und Bezug nehmend auf die beigefügten Zeichnungen erläutert. Es zeigt die
Figur 1 eine Außenansicht eines erfindungsgemäßen medizinischen, insbesondere dentalen, Handstücks;
Figur 2 eine Außenansicht einer erste Ausführungsform einer Stellvorrichtung mit Kulissenführung und Drehknopf zum Betätigen einer Werkzeughalterung eines medizinischen, insbesondere dentalen, Handstücks;
Figur 3 eine Schnittdarstellung durch die Stellvorrichtung und den Drehknopf der Figur 2;
Figur 4 das in der Figur 3 gekennzeichnete Detail der Stellvorrichtung in vergrößerter Ansicht;
Figur 5 eine Explosionsdarstellung der Stellvorrichtung und des Drehknopfs der Figur 2;
Figur 6 eine Ausführungsform einer Kulissenhülse einer Stellvorrichtung mit Kulissenführung;
Figur 7 eine Außenansicht einer zweiten Ausführungsform einer Stellvorrichtung mit Kulissenführung und Drehknopf zum Betätigen einer Werkzeughalterung eines medizinischen, insbesondere dentalen, Handstücks;
Figur 8 ein Detail der Stellvorrichtung der Figur 7 in vergrößerter Ansicht;
Figur 9 eine Ausführungsform eines medizinischen, insbesondere dentalen, Handstücks, bei dem der Drehknopf von der Werkzeughalterung entfernt ist und die Werkzeughalterung in eine Haltestellung versetzt ist, in der ein Behandlungswerkzeug in der Werkzeughalterung fixiert ist;
Figur 10 das medizinische, insbesondere dentale, Handstück der Figur 9, bei dem der Drehknopf gedreht und der Werkzeughalterung angenähert ist und die Werkzeughalterung in eine Aufnahme-/Lösestellung versetzt ist, in der ein Behandlungswerkzeug in die Werkzeughalterung einführbar oder daraus entfernbar ist.

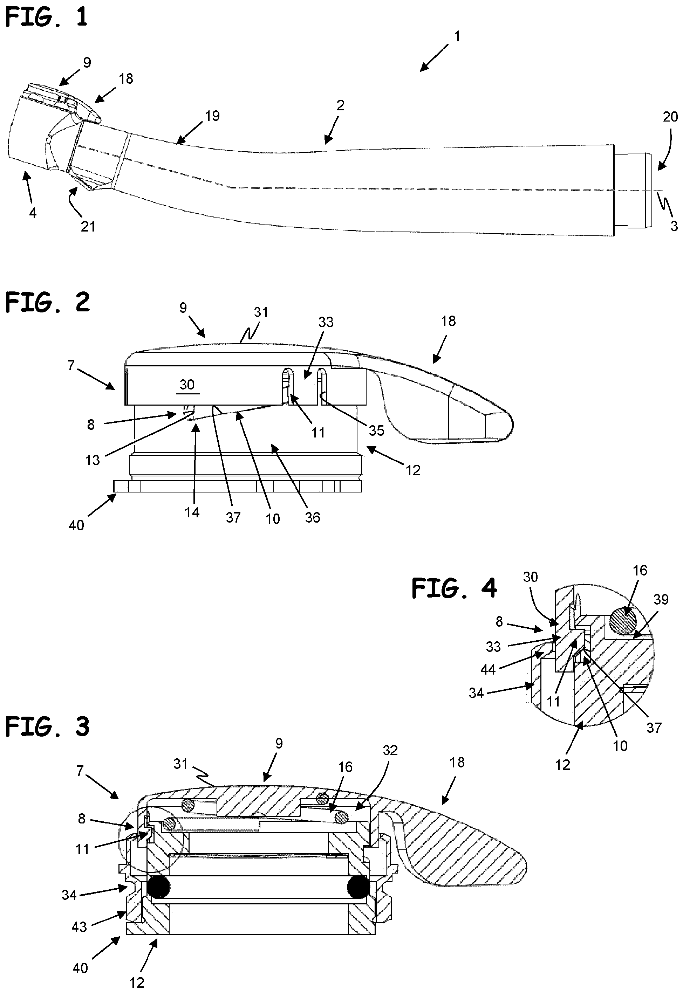

Die Figur 1 zeigt ein medizinisches, insbesondere dentales, Handstück 1 mit einem sich entlang einer Längsachse 3 erstreckenden, gebogenen Griffstück 2 und einem an einem Ende des Griffstücks 2 angeordneten Kopfstück 4. Eine Außenhülse 19 grenzt das Handstück 1 von der Umgebung ab. Die Außenhülse 19 wird insbesondere durch eine Kopfhülse und eine Griffhülse gebildet. An dem Ende des Griffstücks 2, das dem Kopfstück 4 gegenüber liegt, ist eine Anschlussvorrichtung 20 vorgesehen, um das Handstück 1 lösbar an eine Medienquelle, wie Luft oder Wasser, eine Regel- oder Steuerungsvorrichtung und/ oder eine Energiequelle, wie Druckluft oder elektrische Energie, anschließen zu können. Am kopfstücknahen Ende des Griffstücks 2 ist vorzugsweise eine Beleuchtungsvorrichtung 21 zur Abgabe von Strahlung, insbesondere sichtbarem Licht, auf ein Behandlungswerkzeug und/ oder die Behandlungsstelle angeordnet.

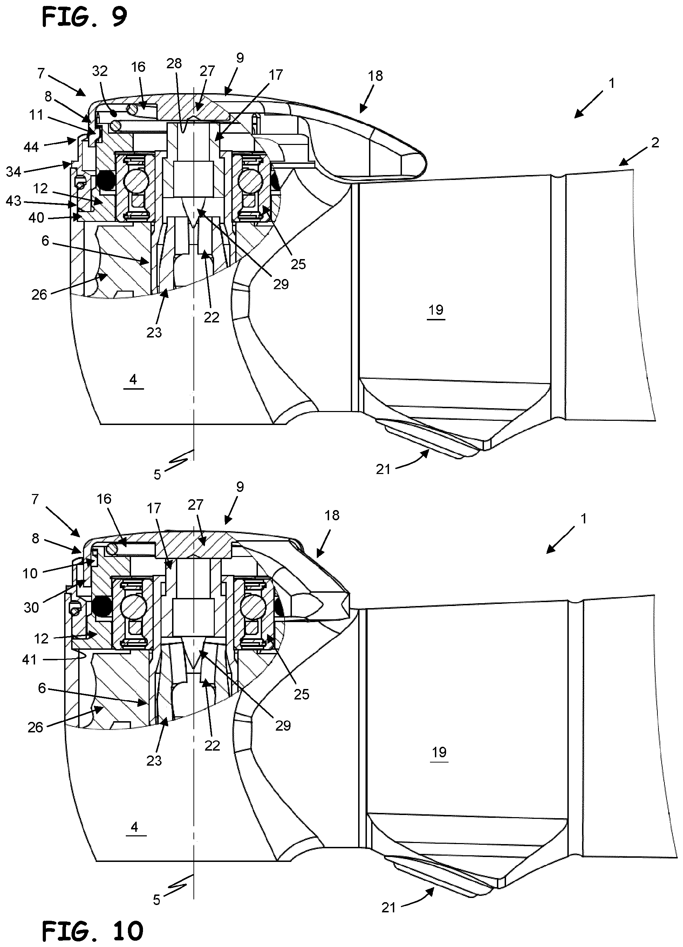

Die Figuren 9 und 10 zeigen ein Kopfstück 4 eines Handstücks 1 in partieller Schnittdarstellung. Es ist zu erkennen, dass in dem Kopfstück 4 eine Werkzeughalterung 6 drehbar um eine Drehachse 5 angeordnet ist. Die Werkzeughalterung 6 ist zur lösbaren Aufnahme eines Behandlungswerkzeugs (nicht dargestellt) vorgesehen. Die in den Figuren 9 und 10 dargestellte Werkzeughalterung 6 ist als kraftschlüssige Werkzeughalterung mit einer Spannzange oder Spannhülse 23 und federnden Spannlaschen 22 ausgebildet. Kraftschlüssige Werkzeughalterungen in verschiedenen Ausführungsformen sind dem Fachmann bekannt, so dass auf ihren Aufbau und ihre Funktionsweise nicht weiter eingegangen wird.

Das Handstück 1 der Figuren 1, 9 und 10 ist pneumatisch betrieben. Eine pneumatische Leitung führt Druckluft von der Anschlussvorrichtung 20 durch das Griffstück 2 bis an ein im Kopfstück 4 drehbar angeordnetes Laufrad 26. Durch Abgabe der Druckluft auf das Laufrad 26 ist dieses gemeinsam mit der Werkzeughalterung 6, die mit dem Laufrad 26 drehfest verbunden ist, in Rotation versetzbar. Alternativ kann das Handstück 1 auch als mechanisches Handstück mit einer Antriebswelle, einem Zahnrad und/ oder einem Getriebe ausgebildet sein. Die Werkzeughalterung 6 und das Laufrad 26 sind durch zumindest ein Wälzlager 25, insbesondere Kugellager, im Kopfstück 4 drehbar gelagert.

An bzw. in dem Kopfstück 4 ist eine Stellvorrichtung 7 vorgesehen, welche auf die Werkzeughalterung 6 einwirkt und ausgebildet ist, die Werkzeughalterung 6 wahlweise in eine Aufnahme-/Lösestellung, in welcher das Behandlungswerkzeug in die Werkzeughalterung 6 aufnehmbar oder daraus entfernbar ist (siehe Figur 10), und eine Haltestellung, in welcher das Behandlungswerkzeug in der Werkzeughalterung 6 gehalten ist (siehe Figur 9), zu versetzen. Die Stellvorrichtung 7, siehe dazu auch die Figuren 2 - 8, weist eine Kulissenführung 8 auf, durch welche ein am Kopfstück 4 angeordneter Drehknopf 9 entlang oder längs der Drehachse 5 relativ zur Werkzeughalterung 6 bewegbar ist.

Die Stellvorrichtung 7 ist derart ausgebildet, dass, wenn der Drehknopf 9 der Werkzeughalterung 6 angenähert ist, die Werkzeughalterung 6 in die Aufnahme-/Lösestellung versetzt ist, und wenn der Drehknopf 9 von der Werkzeughalterung 6 entfernt ist, die Werkzeughalterung 6 in die Haltestellung versetzt ist. Dies ist in den Figuren 9 und 10 dargestellt: in der Figur 9 befindet sich der Drehknopf 9 in einer ersten Position, in welcher er von der Werkzeughalterung 6 entfernt ist und ein Dreharm 18 des Drehknopfs 9 im Wesentlichen parallel zu dem Griffstück 2 und/ oder der Längsachse 3 angeordnet ist. Zwischen der Spannzange 23 und dem Drehknopf 9 befindet sich ein Eingriffselement 17 mit einem Keil 29, das entlang der Drehachse 5 verschiebbar in dem Kopfstück 4 gelagert ist. Der Drehknopf 9, insbesondere ein an der Innenseite des Drehknopfs 9 vorgesehener Höcker 27, ist durch einen Luftspalt 28 von dem Eingriffselement 17 beabstandet. Das Eingriffselement 17 befindet sich, so wie der Drehknopf 9, in einer von der Werkzeughalterung 6 entfernten Position. Somit greift das Eingriffselement 17, insbesondere dessen Keil 29, nicht oder nur geringfügig in die Spannlaschen 22 der Spannzange 23 ein, wodurch sich die Spannlaschen 22 in einer radial zur Drehachse 5 angenäherten Position befinden. In dieser Position nimmt die Werkzeughalterung 6 die Haltestellung, in welcher ein Behandlungswerkzeug in der Werkzeughalterung 6 gehalten ist. Die Spannlaschen 22 klemmen dabei das Behandlungswerkzeug zwischen sich ein.

In der Figur 10 befindet sich der Drehknopf 9 in einer zweiten Position, in welcher er der Werkzeughalterung 6 angenähert ist, indem er sich, durch die Kulissenführung 8 geführt, entlang der Drehachse 5 in Richtung der Werkzeughalterung 6 bewegte. Der Drehknopf 9, insbesondere ein an der Innenseite des Drehknopfs 9 vorgesehener Höcker 27, kontaktiert das Eingriffselement 17 und schob es während seiner Bewegung entlang der Drehachse 5 in Richtung der Werkzeughalterung 6. Somit greift das Eingriffselement 17, insbesondere dessen Keil 29, in die Spannlaschen 22 der Spannzange 23 derart ein, dass sich die Spannlaschen 22 in einer radial zur Drehachse 5 entfernten oder gespreizten Position befinden. In dieser Position nimmt die Werkzeughalterung 6 die Aufnahme-/Lösestellung ein, in welcher ein Behandlungswerkzeug in die Werkzeughalterung 6 aufnehmbar oder daraus lösbar ist.

Wird der Dreharm 18 wieder in seine erste, in Figur 9 dargestellt Position gedreht, so entfernt sich der Drehknopf 9, wiederum durch die Kulissenführung 8 geführt, entlang der Drehachse 5 von der Werkzeughalterung 6. Diese Bewegung wird insbesondere durch ein Federelement 16, das an einer Kulissenhülse 12 gelagert ist und den Drehknopf 9 gegen die Kulissenhülse 12 vorspannt, unterstützt. Das Eingriffselement 17 bewegt sich, dem Drehknopf 9 folgend, ebenfalls entlang der Drehachse 5, so dass der Keil 29 nicht oder nur geringfügig in die Spannlaschen 22 der Spannzange 23 eingreift, wodurch die Spannlaschen 22 in ihre radial zur Drehachse 5 angenäherten Position zurückkehren können.

Die Figuren 2 - 6 zeigen im Detail ein erstes Ausführungsbeispiel einer Stellvorrichtung 7 mit Kulissenführung 8 und Drehknopf 9 zum Betätigen der Werkzeughalterung 6. Die Kulissenführung 8 weist mehrere Kulissennuten 10 und mehrere Kulissensteine 11 auf. Die in den Figuren dargestellte Kulissenführung 8 umfasst jeweils drei Kulissennuten 10 und Kulissensteine 11, es können jedoch auch mehr oder weniger sein, zum Beispiel jeweils zwei, vier oder fünf Kulissennuten 10 und Kulissensteine 11. Jeweils drei Kulissennuten 10 und Kulissensteine 11 werden jedoch als beste Lösung erachtet, da hier ein optimaler Kompromiss zwischen zuverlässiger Führung und nicht zu hohem Herstellungsaufwand verwirklicht ist. Unabhängig von der Anzahl der Kulissennuten 10 und der Kulissensteine 11 ist jeweils ein Kulissenstein 11 in einer Kulissennut 10 aufgenommen und wird darin geführt.

Gemäß den Figuren 2 - 10 sind die Kulissensteine 11 am Drehknopf 9 angeordnet, gemeinsam mit dem Drehknopf 9 drehbar und entlang oder parallel zur Drehachse 5 verschiebbar. Die Kulissensteine 11 sind gemäß den Figuren 2 - 6 einteilig mit dem Drehknopf 9 ausgebildet. Die Kulissensteine 11 sind an einer äußeren Ringwand 30 des Drehknopfs 9 angeordnet, wobei die äußere Ringwand 30 an einem äußeren Umfang einer Kappe 31 des Drehknopfes 9 und gewinkelt zur Kappe 31 angeordnet ist. Die Kulissensteine 11 ragen von der äußeren Ringwand 30 in einen durch den Drehknopf 9 gebildeten Innenraum 32 des Drehknopfs 9, der durch die Kappe 31 und die gewinkelt zur Kappe 31 angeordnete äußere Ringwand 30 gebildet ist.

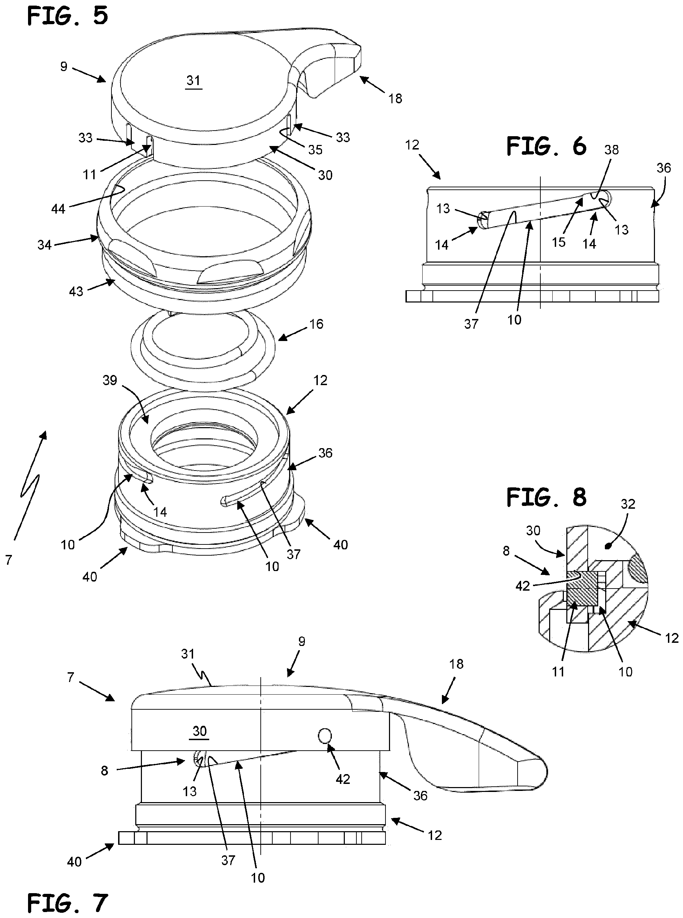

Die Kulissensteine 11 sind an einem federnden Abschnitt 33 der äußeren Ringwand 30 vorgesehen, um das Einfügen der Kulissensteine 11 in die Kulissennuten 10 während der Montage des Handstücks 1 zu erleichtern, siehe insbesondere Figuren 2 und 5. Der federnde Abschnitt 33 der äußeren Ringwand 30 ist zum Beispiel durch Federlaschen gebildet. Auf jedem federnden Abschnitt 33, i.e. jeder Federlasche, ist ein Kulissenstein 11 angeordnet und insbesondere einteilig mit dem federnden Abschnitt 33 ausgebildet. Die federnden Abschnitte 33 sind durch Einschnitte 35 in der äußeren Ringwand 30 gebildet.

An der Kulissenhülse 12 sind die Kulissennuten 10 vorgesehen. Die Kulissennuten 10 sind schlitzförmige Fräsungen im Mantel oder in einer zylindrischen Hülsenwand 36 der Kulissenhülse 12, siehe insbesondere Figur 5. Die Kulissennuten 10 weisen Seitenwände oder Wandungen 37 auf, an denen insbesondere die Kulissensteine 11 geführt und/ oder gelagert sind. Die Kulissennuten 10 erstrecken sich kreisbogenförmig ansteigend in der Hülsenwand 36 und um die Drehachse 5 der Werkzeughalterung 6. Die Länge und Steigung der Kulissennuten 10 einer Kulissenhülse 12 sind gleich, so dass die Bewegung des Drehknopfs 9 gleichmäßig ist.

Die Kulissennuten 10 weisen an den Enden ihrer Längsausdehnungen geschlossene Enden 14 auf. An diesen geschlossenen Enden 14 sind Anschläge 13 vorgesehen und/ oder die geschlossenen Enden 14 bilden Anschläge 13. Die Anschläge 13 begrenzen die Bewegung der Kulissensteine 11 und somit die Drehung des Drehknopfs 9 um und die Bewegung des Drehknopfs 9 entlang der Drehachse 5 bzw. relativ zur Werkzeughalterung 6. Kontaktieren die Kulissensteine 11 die Anschläge 13 und ist damit die Drehung des Drehknopfes 9 gestoppt, erkennt der Anwender/ die Anwenderin je nach Position des Dreharms 18 unzweifelhaft, dass die Werkzeughalterung 6 die Aufnahme-/Lösestellung oder die Haltestellung einnimmt.

Zumindest an einem Ende 14 der Kulissennuten 10 ist eine Schulter oder Stufe 15 vorgesehen, über welche ein in einer Kulissennut 10 geführter Kulissenstein 11 bewegbar ist, siehe insbesondere Figur 6. Die Stufe 15 ist an jenem Ende einer länglichen Kulissennut 10 angeordnet, das der Kappe 31 des Drehknopfs 9 näher ist. Die Stufe 15 ist von dem geschlossenen Ende 14 und/ oder dem Anschlag 13 beabstandet, so dass ein Kulissenstein 11 nach dem Überwinden der Stufe 15 zwischen der Stufe 15 und dem geschlossenen Ende 14 oder dem Anschlag 13 Platz findet. Der Abschnitt einer Kulissennut 10 zwischen der Stufe 15 und dem geschlossenen Ende 14 oder dem Anschlag 13 ist zusätzlich als Rücksprung 38 ausgebildet, so dass der Kulissenstein 11 nach dem Überwinden der Stufe 15 in diesen Rücksprung 38 mit einem akustisch wahrnehmbaren Geräusch und/ oder einer haptisch wahrnehmbaren Vibration einrastet. Damit erhält der Anwender/ die Anwenderin in vorteilhafter Weise eine eindeutige oder zusätzlich Rückmeldung über den Zustand der Werkzeughalterung, insbesondere die Einnahme der Haltestellung.

Die Kulissenhülse 12 ist als hohle, zylindrische Hülse ausgebildet, siehe insbesondere die Figuren 5 und 6. Damit kann sie in ihrem Inneren, zum Beispiel an Schultern oder Rücksprüngen, andere Bauteile des Kopfstücks 4 aufnehmen und/ oder lagern, zum Beispiel das Wälzlager 25, das Eingriffselement 17, zumindest Teile der Spannzange 23 und/ oder der Werkzeughalterung 6, siehe Figuren 9, 10. Auch die Außenseite der Kulissenhülse 12 oder ihre zylindrische Hülsenwand 36 kann eine Aufnahme oder Lagerstelle 39 für Bauteile des Kopfstücks 4 aufweisen, zum Beispiel für das Federelement 16.

Um ein Drehen der Kulissenhülse 12, insbesondere während der Drehung des Drehknopfs 9, in dem Kopfstück 4 zu unterbinden, sind an der Außenseite oder der zylindrische Hülsenwand 36 der Kulissenhülse 12 Fortsätze 40 vorgesehen, siehe insbesondere Figur 5. An der Innenseite der Kopfhülse der Außenhülse 19 sind Rücksprünge 41 zur Aufnahme der Fortsätze 40 vorgesehen, siehe Figuren 9 und 10. Die Rücksprünge 41 und Fortsätze 40 bilden ineinandergreifende Sperrelemente, die ein Verdrehen der Kulissenhülse 12 relativ zum Handstück 1 verhindern.

Am Drehknopf 9 ist ein Dreharm 18 zum erleichterten Drehen des Drehknopfs 9 vorgesehen. Der Dreharm 18 ist einteilig mit dem Drehknopf 9 ausgebildet. Der Dreharm 18 erstreckt sich entlang der Außenseite oder Griffhülse des Griffstücks 2, insbesondere parallel zum Griffstück 2, wenn die Werkzeughalterung 6 die Haltestellung einnimmt. Der Dreharm 18 ist mit dem Drehknopf 9 gemeinsam um die Drehachse 5 der Werkzeughalterung 6 drehbar und nähert sich gemeinsam mit dem Drehknopf 9 gleichzeitig mit der Drehung der Werkzeughalterung 6 und der Längsachse 3 des Griffstücks 2 an bzw. entfernt sich davon bei der Gegenbewegung.

Die Stellvorrichtung 7 ist durch einen Schraubring 34 am Kopfstück 4 befestigt, siehe insbesondere Figuren 5 und 9. Der Schraubring 34 weist an seiner Außenseite ein Gewinde 43 auf, das mit einem Innengewinde an der Innenseite der Kopfhülse des Kopfstücks 4 verschraubbar ist. Durch das Verschrauben der beiden Gewinde presst der Schraubring 34, insbesondere eine Schmalseite des Schraubrings 34, die Fortsätze 40 der Kulissenhülse 12 in die Rücksprünge 41 und fixieren dadurch die Kulissenhülse 12 im Kopfstück 4. Der Schraubring 34 weist des Weiteren einen ringförmigen Kragen 44 auf, der den Drehknopf 9, insbesondere dessen äußere Ringwand 30, umgibt, wenn der Schraubring 34 mit dem Kopfstück 4 verschraubt ist. Der Kragen 44 des Schraubrings 34 kontaktiert hierbei die äußere Ringwand 30 und drückt insbesondere die Kulissensteine 11 in die jeweiligen Kulissennuten 10. Dadurch ist der Drehknopf 9 drehbar an der Kulissenhülse 12 und an dem Kopfstück 4 befestigt. Die Kulissensteine 11 bewirken somit durch das Einrasten in den Kulissennuten 10, dass der Drehknopf 9 an dem Kopfstück 4 drehbar hält oder fixiert ist.

Die Stellvorrichtung 7 mit Kulissenführung 8 und Drehknopf 9 zum Betätigen einer Werkzeughalterung 6 der Figuren 7 und 8 weist den gleichen Aufbau wie die Stellvorrichtung der Figuren 2 - 6 auf, so dass zur Vermeidung von Wiederholungen auf die Beschreibung der Stellvorrichtung der Figuren 2 - 6 verwiesen wird. Der einzige Unterschied zu der Stellvorrichtung der Figuren 2 - 6 besteht darin, dass die an dem Drehknopf 9 vorgesehenen Kulissensteine 11 als separate Elemente ausgebildet sind, siehe insbesondere Figur 8. Am Drehknopf 9, insbesondere an dessen äußerer Ringwand 30, ist für jeden Kulissenstein 11 eine Bohrung 42 vorgesehen, in die ein Kulissenstein 11 eingefügt, zum Beispiel eingepresst und/ oder verklebt, ist. Die Kulissensteine 11 sind damit wiederum drehfest an dem Drehknopf 9 befestigt und gemeinsam mit dem Drehknopf 9 drehbar und entlang der Drehachse 5 verschiebbar, wie im Vorstehenden beschrieben. Die Kulissensteine 11 sind zum Beispiel durch Stifte gebildet. Die Ausbildung der Kulissensteine 11 als separate Elemente erleichtert die Montage des Drehknopfes 9 auf dem Kopfstück 4. Damit kann die äußere Ringwand 30 als durchgängiges Element ohne Einschnitte 35 zur Bildung der federnden Abschnitte 33 mit den Kulissensteinen 11 geformt sein.

In den Figuren 1 - 10 ist die Stellvorrichtung 7 oder der Drehknopf 9 derart ausgebildet, dass der Drehknopf 9, ausgehend von der ersten Position, in welcher er von der Werkzeughalterung 6 entfernt ist und/ oder der Dreharm 18 im Wesentlichen parallel zu dem Griffstück 2 und/ oder der Längsachse 3 angeordnet ist, im Uhrzeigersinn in die zweite Position, in welcher der Drehknopf 9 der Werkzeughalterung 6 angenähert ist, drehbar ist. Selbstverständlich ist es auch möglich die Stellvorrichtung 7, insbesondere die Kulissennuten 10 derart auszubilden, dass der Drehknopf 9, ausgehend von der ersten Position, gegen den Uhrzeigersinn in die zweite Position drehbar ist. Gemäß den Figuren 1 - 10 sind die Kulissennuten 10 derart ausgebildet, dass sie sich im Uhrzeigersinn der Werkzeughalterung 6 annähern. Um die alternative Drehrichtung des Drehknopfs 9 entgegen dem Uhrzeigersinn zu realisieren, sind die Kulissennuten 10 derart auszubilden, dass sie sich gegen den Uhrzeigersinn der Werkzeughalterung 6 annähern.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Medizinisches, insbesondere dentales, gewinkeltes Handstück (1), umfassend:
ein sich entlang einer Längsachse (3) erstreckendes Griffstück (2),
ein an einem Ende des Griffstücks (2) angeordnetes Kopfstück (4),
eine in dem Kopfstück (4) drehbar um eine Drehachse (5) angeordnete Werkzeughalterung (6) zur lösbaren Aufnahme eines Behandlungswerkzeugs, wobei die Drehachse (5) der Werkzeughalterung (6) und die Längsachse (3) des Griffstücks (2) gewinkelt zueinander, in einem Winkel ungleich 0°, angeordnet sind,
eine an dem Kopfstück (4) vorgesehene und auf die Werkzeughalterung (6) wirkende Stellvorrichtung (7), die ausgebildet ist, die Werkzeughalterung (6) wahlweise in eine Aufnahme-/Lösestellung, in welcher das Behandlungswerkzeug in die Werkzeughalterung (6) aufnehmbar oder daraus entfernbar ist, und eine Haltestellung, in welcher das Behandlungswerkzeug in der Werkzeughalterung (6) gehalten ist, zu versetzen, wobei
die Stellvorrichtung (7) eine Kulissenführung (8) aufweist, die derart ausgebildet ist, dass durch Drehen eines am Kopfstück (4) angeordneter Drehknopfs (9) der Drehknopf (9) gleichzeitig eine Drehbewegung um die Drehachse (5) und eine Längsbewegung entlang der Drehachse (5) der Werkzeughalterung (6) ausführt, derart dass, wenn der Drehknopf (9) der Werkzeughalterung (6) angenähert ist, die Werkzeughalterung (6) in die Aufnahme-/Lösestellung versetzt ist, und wenn der Drehknopf (9) von der Werkzeughalterung (6) entfernt ist, die Werkzeughalterung (6) in die Haltestellung versetzt ist, **dadurch gekennzeichnet, dass**
die Werkzeughalterung (6) ausschließlich durch die gleichzeitige Drehbewegung und Längsbewegung des Drehknopfs (9) in die Aufnahme-/Lösestellung und Haltestellung versetzbar ist.

2. Medizinisches, insbesondere dentales, gewinkeltes Handstück (1) nach Anspruch 1, **dadurch gekennzeichnet, dass**
die Kulissenführung (8) eine Kulissennut (10) und einen in der Kulissennut (10) geführten Kulissenstein (11) aufweist, wobei entweder die Kulissennut (10) oder der Kulissenstein (11) an dem Drehknopf (9) vorgesehen und mit dem Drehknopf (9) drehbar ausgebildet ist.

3. Medizinisches, insbesondere dentales, gewinkeltes Handstück (1) nach Anspruch 2, **gekennzeichnet durch**
eine Kulissenhülse (12), an welcher entweder die nicht an dem Drehknopf (9) ausgebildete Kulissennut (10) oder der nicht an dem Drehknopf (9) ausgebildete Kulissenstein (11) vorgesehen ist.

4. Medizinisches, insbesondere dentales, gewinkeltes Handstück (1) nach Anspruch 2 oder 3, **dadurch gekennzeichnet, dass**
die Kulissennut (10) sich kreisbogenförmig ansteigend um die Drehachse (5) der Werkzeughalterung (6) erstreckt.

5. Medizinisches, insbesondere dentales, gewinkeltes Handstück (1) nach einem der Ansprüche 2 - 4, **dadurch gekennzeichnet, dass**
die Kulissennut (10) an ihren Enden (14) Anschläge (13) aufweist, welche die Bewegung des in der Kulissennut (10) geführten Kulissensteins (11) begrenzen.

6. Medizinisches, insbesondere dentales, gewinkeltes Handstück (1) nach einem der Ansprüche 2 - 5, **dadurch gekennzeichnet, dass**
die Kulissennut (10) an zumindest einem Ende (14) eine Stufe (15) aufweist, über welche der in der Kulissennut (10) geführte Kulissenstein (11) bewegbar ist.

7. Medizinisches, insbesondere dentales, gewinkeltes Handstück (1) nach einem der vorstehenden Ansprüche, **dadurch gekennzeichnet, dass**
der Kulissenstein (11) einteilig mit dem Drehknopf (9) oder der Kulissenhülse (12) ausgebildet ist.

8. Medizinisches, insbesondere dentales, gewinkeltes Handstück (1) nach einem der vorstehenden Ansprüche, **dadurch gekennzeichnet, dass**
der Kulissenstein (11) den Drehknopf (9) drehbar an dem Kopfstück (4) hält.

9. Medizinisches, insbesondere dentales, gewinkeltes Handstück (1) nach einem der Ansprüche 3 - 8, **dadurch gekennzeichnet, dass**
die Kulissenhülse (12) ein Federelement (16) lagert, welches den Drehknopf (9) und die Kulissenhülse (12) gegeneinander vorspannt.

10. Medizinisches, insbesondere dentales, gewinkeltes Handstück (1) nach einem der vorstehenden Ansprüche, **gekennzeichnet durch**
ein relativ zur Werkzeughalterung (6) bewegliches Eingriffselement (17), welches durch die Annäherung des Drehknopfs (9) in Richtung der Werkzeughalterung (6) ebenfalls in Richtung der Werkzeughalterung (6) bewegbar ist, um die Werkzeughalterung (6) in die Aufnahme-/Lösestellung zu versetzen.

11. Medizinisches, insbesondere dentales, gewinkeltes Handstück (1) nach Anspruch 10, **dadurch gekennzeichnet, dass**
das Eingriffselement (17) als Teil des Drehknopfs (9) ausgebildet ist.

12. Medizinisches, insbesondere dentales, gewinkeltes Handstück (1) nach Anspruch 10 oder 11, **dadurch gekennzeichnet, dass**
das Eingriffselement (17) als vom Drehknopf (9) beabstandetes Teil ausgebildet ist, das durch die Annäherung des Drehknopfs (9) in Richtung der Werkzeughalterung (6) von dem Drehknopf (9) kontaktierbar und mit dem Drehknopf (9) in Richtung der Werkzeughalterung (6) bewegbar ist.

13. Medizinisches, insbesondere dentales, gewinkeltes Handstück (1) nach einem der vorstehenden Ansprüche, **gekennzeichnet durch**
einen am Drehknopf (9) vorgesehenen Dreharm (18) zum Drehen des Drehknopfs (9), wobei der Dreharm (18) sich entlang der Außenseite des Griffstücks (2) erstreckt.

14. Medizinisches, insbesondere dentales, gewinkeltes Handstück (1) nach Anspruch 13, **dadurch gekennzeichnet, dass**
der Dreharm (18) mit dem Drehknopf (9) um die Drehachse (5) der Werkzeughalterung (6) drehbar ist und gleichzeitig mit der Drehung um die Drehachse (5) sich der Längsachse (3) des Griffstücks (2) annähert oder sich von dieser entfernt.

15. Medizinisches, insbesondere dentales, gewinkeltes Handstück (1) nach Anspruch 14, **dadurch gekennzeichnet, dass**
der Dreharm (18) einteilig mit dem Drehknopf (9) ausgebildet ist.

## Claims

1. Medical, in particular dental, angled handpiece (1), comprising:
a handle piece (2) extending along a longitudinal axis (3),
a head piece (4) arranged at an end of the handle piece (2),
a tool holder (6) arranged in the head piece (4) rotatably about an axis of rotation (5) for detachably receiving a treatment tool, wherein the axis of rotation (5) of the tool holder (6) and the longitudinal axis (3) of the handle piece (2) are arranged at an angle to each other that is not equal to 0°,
an actuating device (7) provided on the head piece (4) and acting on the tool holder (6), which is configured to move the tool holder (6) selectively into a receive/release position, in which the treatment tool can be received in the tool holder (6) or removed therefrom, and a holding position, in which the treatment tool is held in the tool holder (6), wherein
the actuating device (7) comprises a link guide assembly (8) which is configured such that, through rotation of a rotary knob (9) arranged on the head piece (4) the rotary knob (9) simultaneously performs a rotational movement about the axis of rotation (5) and a longitudinal movement along the axis of rotation (5) of the tool holder (6), such that, when the rotary knob (9) is moved towards the tool holder (6), the tool holder (6) is moved into the receive/release position, and when the rotary knob (9) is moved away from the tool holder (6), the tool holder (6) is moved into the holding position, **characterized in that**
the tool holder (6) can be moved into the receive/release position and the holding position exclusively by the simultaneous rotational movement and longitudinal movement of the rotary knob (9).

2. Medical, in particular dental, angled handpiece (1) according to Claim 1, **characterized in that**
the link guide assembly (8) comprises a link groove (10) and a link block (11) guided in the link groove (10), wherein either the link groove (10) or the link block (11) are provided on the rotary knob (9) and are configured to rotate with the rotary knob (9).

3. Medical, in particular dental, angled handpiece (1) according to Claim 2, **characterized by**
a link sleeve (12) on which either the link groove (10) not comprised by the rotary knob (9) or the link block (11) not comprised by the rotary knob (9) is provided.

4. Medical, in particular dental, angled handpiece (1) according to Claim 2 or 3, **characterized in that**
the link groove (10) extends upwards in an arc of a circle about the axis of rotation (5) of the tool holder (6).

5. Medical, in particular dental, angled handpiece (1) according to any one of Claims 2 - 4, **characterized in that**
the link groove (10) comprises stops (13) at its ends (14) which limit the movement of the link block (11) guided in the link groove (10).

6. Medical, in particular dental, angled handpiece (1) according to any one of Claims 2 - 5, **characterized in that**
the link groove (10) comprises at least at one end (14) a step (15) over which the link block (11) guided in the link groove (10) can be moved.

7. Medical, in particular dental, angled handpiece (1) according to any one of the preceding Claims, **characterized in that**
the link block (11) is formed in one-piece with the rotary knob (9) or the link sleeve (12).

8. Medical, in particular dental, angled handpiece (1) according to any one of the preceding Claims, **characterized in that**
the link block (11) holds the rotary knob (9) rotatably on the head piece (4).

9. Medical, in particular dental, angled handpiece (1) according to any one of Claims 3 - 8, **characterized in that**
the link sleeve (12) supports a spring element (16) which pretensions the rotary knob (9) and the link sleeve (12) against one another.

10. Medical, in particular dental, angled handpiece (1) according to any one of the preceding Claims, **characterized by**
an engagement element (17) movable relative to the tool holder (6), which can be moved in the direction of the tool holder (6) by approach of the rotary knob (9) in the direction of the tool holder (6) to move the tool holder (6) into the receive/release position.

11. Medical, in particular dental, angled handpiece (1) according to Claim 10, **characterized in that**
the engagement element (17) is configured as a part of the rotary knob (9).

12. Medical, in particular dental, angled handpiece (1) according to Claim 10 or 11, **characterized in that**
the engagement element (17) is configured as an element spaced apart from the rotary knob (9) which can be contacted by the rotary knob (9) by the approach of the rotary knob (9) in the direction of the tool holder (6) and can be moved with the rotary knob (9) in the direction of the tool holder (6).

13. Medical, in particular dental, angled handpiece (1) according to any one of the preceding Claims, **characterized by**
a rotary arm (18) provided on the rotary knob (9) for rotating the rotary knob (9), wherein the rotary arm (18) extends along the outside of the handle piece (2).

14. Medical, in particular dental, angled handpiece (1) according to Claim 13, **characterized in that**
the rotary arm (18) is rotatable with the rotary knob (9) about the axis of rotation (5) of the tool holder (6) and simultaneously with the rotation about the axis of rotation (5) approaches or moves away from the longitudinal axis (3) of the handle (2).

15. Medical, in particular dental, angled handpiece (1) according to Claim 14, **characterized in that**
the rotary arm (18) is formed in one-piece with the rotary knob (9).

## Revendications

1. Pièce à main (1) médicale, notamment dentaire coudée, comprenant:
une pièce de préhension (2) s'étendant le long d'un axe longitudinal (3),
une pièce de tête (4), placée sur une extrémité de la pièce de préhension (2),
un porte-outil (6), placé dans la pièce de tête (4), de manière rotative autour d'un axe de rotation (5), destiné à recevoir de manière amovible un outil de traitement, l'axe de rotation (5) du porte-outil (6) et l'axe longitudinal (3) de la pièce de préhension (2) étant placés l'un par rapport à l'autre en formant un coude d'un angle différent de 0°,
un dispositif de réglage (7) prévu sur la pièce de tête (4) et agis-sant sur le porte-outil (6), qui est conçu pour amener le porte-outil (6) sélectivement dans une position de réception / de libération, dans laquelle l'outil de traitement peut être réceptionné dans le porte-outil (6) ou en être retiré, et dans une position de maintien, dans laquelle l'outil de traitement est maintenu dans le porte-outil (6),
le dispositif de réglage (7) comportant un guidage à glissière (8), qui est conçu de telle sorte que par la rotation d'un bouton rotatif (9) placé sur la pièce de tête (4), le bouton rotatif (9) effectue simultanément un déplacement en rotation autour de l'axe de rotation (5) et un déplacement longitudinal le long de l'axe de rotation (5) du porte-outil (6), de telle sorte que lorsque le bouton rotatif (9) est rapproché du porte-outil (6) le porte-outil (6) soit amené dans la position de réception / de libération et lorsque le bouton rotatif (9) est éloigné du porte-outil (6), le porte-outil (6) soit amené dans la position de maintien, **caractérisée en ce que**
le porte-outil (6) peut être amené dans la position de réception / de libération et dans la position de maintien exclusivement par le déplacement en rotation et le déplacement longitudinal simultanés du bouton rotatif (9).

2. Pièce à main (1) médicale, notamment dentaire coudée selon la revendication 1, **caractérisée en ce que**
le guidage à glissière (8) comporte une rainure de coulisse (10) et un coulisseau (11) guidé dans la rainure de coulisse (10), soit la rainure de coulisse (10) ou le coulisseau (11) étant prévu(e) sur le bouton rotatif (9) et conçu(e) de manière rotative avec le bouton rotatif (9).

3. Pièce à main (1) médicale, notamment dentaire coudée selon la revendication 2, **caractérisée par**
une douille de coulisse (12), sur laquelle est prévu(e) soit la rainure de coulisse (10) qui n'est pas conçue sur le bouton rotatif (9) ou le coulisseau (11) qui n'est pas conçu sur le bouton rotatif (9).

4. Pièce à main (1) médicale, notamment dentaire coudée selon la revendication 2 ou 3, **caractérisée en ce que**
la rainure de coulisse (10) s'étend en forme d'arc de cercle, de manière ascendante autour de l'axe de rotation (5) du porte-outil (6).

5. Pièce à main (1) médicale, notamment dentaire coudée selon l'une quelconque des revendications 2 à 4, **caractérisée en ce que**
la rainure de coulisse (10) comporte sur ses extrémités (14) des butées (13), lesquelles limitent le déplacement du coulisseau (11) guidé dans la rainure de coulisse (10).

6. Pièce à main (1) médicale, notamment dentaire coudée selon l'une quelconque des revendications 2 à 5, **caractérisée en ce que**
la rainure de coulisse (10) comporte sur au moins une extrémité (14) un échelon (15), au-delà duquel le coulisseau (11) guidé dans la rainure de coulisse (10) est déplaçable.

7. Pièce à main (1) médicale, notamment dentaire coudée selon l'une quelconque des revendications précédentes, **caractérisée en ce que**
le coulisseau (11) est conçu en monobloc avec le bouton rotatif (9) ou la douille de coulisse (12).

8. Pièce à main (1) médicale, notamment dentaire coudée selon l'une quelconque des revendications précédentes, **caractérisée en ce que**
le coulisseau (11) maintient le bouton rotatif (9) de manière rotative sur la pièce de tête (4).

9. Pièce à main (1) médicale, notamment dentaire coudée selon l'une quelconque des revendications 3 à 8, **caractérisée en ce que**
la douille de coulisse (12) loge un élément à ressort (16), lequel précontraint l'un contre l'autre le bouton rotatif (9) et la douille de coulisse (12)

10. Pièce à main (1) médicale, notamment dentaire coudée selon l'une quelconque des revendications précédentes, **caractérisée par**
un élément d'engagement (17), déplaçable par rapport au porte-outil (6), lequel par le rapprochement du bouton rotatif (9) dans la direction du porte-outil (6), est également déplaçable dans la direction du porte-outil (6), pour amener le porte-outil (6) dans la position de réception / de libération.

11. Pièce à main (1) médicale, notamment dentaire coudée selon la revendication 10, **caractérisée en ce que**
l'élément d'engagement (17) est conçu sous la forme d'une pièce du bouton rotatif (9).

12. Pièce à main (1) médicale, notamment dentaire coudée selon la revendication 10 ou 11, **caractérisée en ce que**
l'élément d'engagement (17) est conçu sous la forme d'une pièce éloignée du bouton rotatif (9), qui par le rapprochement du bouton rotatif (9) dans la direction du porte-outil (6), peut être contactée par le bouton rotatif (9) et qui est déplaçable avec le bouton rotatif (9) dans la direction du porte-outil (6).

13. Pièce à main (1) médicale, notamment dentaire coudée selon l'une quelconque des revendications précédentes, **caractérisée par**
un bras rotatif (18) prévu sur le bouton rotatif (9), destiné à faire tourner le bouton rotatif (9), le bras rotatif (18) s'étendant le long de la face extérieure de la pièce de préhension (2)

14. Pièce à main (1) médicale, notamment dentaire coudée selon la revendication 13, **caractérisée en ce que**
le bras rotatif (18) est rotatif avec le bouton rotatif (9) autour de l'axe de rotation (5) du porte-outil (6) et simultanément à la rotation autour de l'axe de rotation (5), se rapproche de l'axe longitudinal (3) de la pièce de préhension (2) ou s'éloigne de celuici.

15. Pièce à main (1) médicale, notamment dentaire coudée selon la revendication 14, **caractérisée en ce que**
le bras rotatif (18) est conçu en monobloc avec le bouton rotatif (9).
